# EUROPÄISCHE PATENTSCHRIFT

(11) **EP 2 532 916 B1**
(45) Veröffentlichungstag und Bekanntmachung des Hinweises auf die Patenterteilung: **14.10.2015**
(21) Anmeldenummer: 12170427.4
(22) Anmeldetag: 01.06.2012
(51) Int. Cl.: F16D 66/02, F16D 67/00

(54) **Bremsbelag einer Scheibenbremse**
Brake pad of a disc brake
Garniture d'un frein à disque

(30) Priorität: 09.06.2011 DE 102011103696
(43) Veröffentlichungstag der Anmeldung: 12.12.2012
(73) Patentinhaber: KNORR-BREMSE Systeme für Nutzfahrzeuge GmbH, 80809 München (DE)
(72) Erfinder: Gasslbauer, Franz, 84381 Johanniskirchen (DE)
(74) Vertreter: Mattusch, Gundula

(56) Entgegenhaltungen:
- EP-A2- 0 032 071
- WO-A1-2007/057184
- DE-A1-102010 048 988
- JP-A- 6 307 472
- US-A- 3 783 979

## Beschreibung

Die Erfindung betrifft einen Bremsbelag einer Scheibenbremse gemäß dem Gattungsbegriff des Anspruchs 1.

Zur Überwachung der Reibbelagdicke, insbesondere zur Feststellung einer zulässigen Verschleißgrenze des Reibbelages, sind Verschleißsensoren bekannt, in die Kontaktleiter, beispielsweise in Form von Kabeln eingebettet sind.

Bei Erreichen einer vorbestimmten Verschleißgrenze, wenn also der Reibbelag entsprechend weit abgerieben ist, wird der Kontaktleiter von einer rotierenden Bremsscheibe, an die der Bremsbelag, d.h. der Reibbelag gedrückt wird, angeschliffen. Ein dadurch erzeugter elektrischer Impuls wird an einen Signalgeber gegeben, der anzeigt, dass die zulässige Verschleißgrenze des Bremsbelages erreicht ist und ein Auswechseln erforderlich wird.

Allerdings ist damit die Grenzdicke des Reibbelages bereits erreicht, so dass aus Sicherheitsgründen der Bremsbelag sofort ausgetauscht werden sollte. Hier ergeben sich jedoch Probleme, da vielfach keine Möglichkeit besteht, innerhalb kürzester Zeit Ersatz zu beschaffen und zu montieren. Vornehmlich werden solche Bremsbeläge in Scheibenbremsen von Nutzfahrzeugen eingesetzt, die auch auf Fahrstrecken betrieben werden, an denen keine entsprechenden Werkstätten erreichbar sind.

Zweckmäßig wäre es daher, wenn eine Möglichkeit bestünde, den Verschleißzustand des Reibbelages kontrollieren zu können, bevor der Grenzbereich erreicht ist. Eine solche Möglichkeit ist bei den bekannten Bremsbelägen jedoch nicht gegeben, woraus sich Nachteile vor allem hinsichtlich einer dauerhaften Betriebssicherheit ergeben.

In der DE 10 2008 019 264 A1 ist ein Bremsbelag geoffenbart, bei dem der Verschleißsensor durch eine Bohrung in der Belagträgerplatte gesteckt und dort axial gesichert gehalten ist.

Diese Maßnahme erlaubt zum einen eine vereinfachte Herstellung der Belagträgerplatte, da die bis dahin vorgesehene Nut, vergleichbar dem Schlitz im Reibbelag, nur mit einem relativ hohen Fertigungsaufwand einzubringen war, während nun lediglich ein entsprechendes Loch gebohrt werden muss, und zum anderen den Einsatz von Materialien, die ebenfalls gegenüber dem bis dahin gebräuchlichen bzw. notwendigen kostengünstiger sind. Während die in die Nut einzusetzenden Verschleißsensoren aus einem Kunststoff bestanden, der sowohl wärmebeständig wie auch elastisch sein musste, kann der in die Bohrung der Belagträgerplatte eingesteckte Verschleißsensor aus einem Material bestehen, das ausschließlich wärmebeständig ist.

Die US 3 783 979 A, die DE 10 2010 048988 A1 sowie die EP 0 032 071 A2 offenbaren jeweils einen Bremsbelag für eine Scheibenbremse mit einem Verschleißsensor, der in einen offenen Schlitz des Reibbelages ragt. Die WO 2007/057184 A1 zeigt und beschreibt einen Bremsbelag, insbesondere für eine Trommelbremse, mit einem Verschleißsensor, der in eine Bohrung der Belagträgerplatte eingesetzt ist.

Der Erfindung liegt die Aufgabe zugrunde, einen Bremsbelag der gattungsgemäßen Art so weiterzuentwickeln, dass er kostengünstiger herstellbar ist und seine Verwendungsfähigkeit verbessert wird.

Diese Aufgabe wird durch einen Bremsbelag mit den Merkmalen des Anspruchs 1 gelöst.

Die erfindungsgemäße Ausgestaltung des Bremsbelages schafft nun die Möglichkeit, bei Bedarf den Verschleiß des Reibbelages zu erkennen und zwar prinzipiell bei jedem Abnutzungsgrad, bevor die Verschleißgrenze erreicht ist.

So kann vor einer längeren Fahrt durch einfaches Einsehen in die Scheibenbremse, in die der Bremsbelag eingebaut ist, festgestellt werden, ob eine ausreichende Reibbelagdicke vorhanden ist, um die geplante Strecke störungsfrei zurücklegen zu können.

Naturgemäß wird dadurch die Betriebssicherheit des Fahrzeuges insgesamt verbessert, ebenso wie Kosten vermieden werden, die sich daraus ergeben, dass plötzlich während einer Fahrt die Verschleißgrenze angezeigt wird und ein Bremsbelagwechsel erforderlich wird.

Nach einer vorteilhaften Weiterbildung der Erfindung ist vorgesehen, den Verschleißsensor in Form eines Stopfens aus Kunststoff herzustellen, der farblich abgesetzt ist gegenüber dem Reibbelag und zwar so, dass eine einfache optische Unterscheidung bei einem Einblick problemlos möglich ist.

Prinzipiell denkbar ist jedoch auch, den Stopfen aus einem vorzugsweise Nicht-Eisen-Metall, beispielsweise Aluminium oder Messing, herzustellen, die farblich einen Kontrast zu dem eher dunklen Reibbelag bilden.

Ein weiterer Gedanke der Erfindung sieht vor, dass, wenn der Verschleißsensor, d.h. der Stopfen als Spritzgussteil aus Kunststoff hergestellt ist, den Kontaktleiter, beispielsweise ein Kabel, bei der Herstellung des Stopfens mit einzubringen, d.h., den Kontaktleiter zu umspritzen. Hierdurch wird eine außerordentlich einfache Herstellung des Verschleißsensors ermöglicht, ebenso wie eine entsprechend einfache Montage, da der Stopfen lediglich in die Bohrung der Belagträgerplatte eingesteckt und dort gegen axiale Verschiebung gesichert wird.

Hierzu weist der Stopfen einerseits einen an der dem Reibbelag abgewandten Rückseite der Belagträgerplatte anliegenden Kopf auf und andererseits beispielsweise einen Sicherungsring z.B. in Form eines Sprengringes, der an der dem Reibbelag zugewandten Seite an der Belagträgerplatte anliegt und nach dem Einsetzen des Stopfens und vor dem Aufbringen des Reibbelages mit dem Schaft des Stopfens verspannt wird.

Selbstverständlich besteht auch die Möglichkeit das Kabel, bei entsprechender Formung des Stopfens, darin einzuknüpfen.

Bevorzugt ragt der Schaft des Stopfens bis nahe an die dann noch unbenutzte Reibfläche des Reibbelages heran. Der Kontaktleiter hingegen ist in seiner Einstecktiefe durch den vorgeschriebenen minimalen Restbestand des Reibbelages vorgegeben.

Neben der genannten Einfärbung des Stopfens bzw. dessen materialbedingter Färbung, sind auch andere optische Abhebungen denkbar, wobei beispielsweise ein Farbauftrag auf der Mantelfläche des Stopfens vorgesehen sein kann, auf die überdies farbliche Markierungen aufbringbar sind, mit denen eine noch genauere Abschätzung der Reibbelagdicke möglich ist, wenn die Reibfläche die jeweilige, beispielsweise durch einen Strich gekennzeichnete Markierung erreicht.

Neben den erwähnten Sicherungsmöglichkeiten durch Sicherungsringe sind auch andere Sicherungsmittel denkbar, die überdies nicht nur eine axiale, sondern auch eine Verdrehsicherung bilden können.

Des Weiteren kann der Schaft des Stopfens im Querschnitt unterschiedlich geformt sein, beispielsweise so, dass der in die Bohrung der Belagträgerplatte eingesetzte Teil zylindrisch ist, während der sich anschließende Bereich rechteckig oder quadratisch ausgebildet ist, wodurch eine größere erkennbare Sichtfläche von der offenen Seite des Schlitzes her erreicht wird.

Prinzipiell schafft die Erfindung nun einen Bremsbelag, dessen Verschleißsensor zwei Funktionen erfüllt, nämlich eine optische und eine mechanische Verschleißerkennung, wobei bemerkenswert ist, dass dieser Verschleißsensor praktisch kostenneutral herstellbar ist.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teilausschnitt eines erfindungsgemäßen Bremsbelages in einer geschnittenen Seitenansicht
- Figur 2: den Teilausschnitt nach Figur 1 in einer Vorderansicht.

In den Figuren ist ein Teil eines insgesamt mit dem Bezugszeichen 1 versehenen Bremsbelages dargestellt, der eine Belagträgerplatte 2 und einen darauf befestigten Reibbelag 3 aufweist.

In einem Randbereich des Bremsbelages 1 ist ein Verschleißsensor 5 angeordnet, der im Ausführungsbeispiel als Stopfen ausgebildet ist, mit einem zylindrischen Schaft 6 und einem Kopf 7, wobei sich der Kopf 7 an der dem Reibbelag 3 abgewandten Rückseite der Belagträgerplatte 2 abstützt.

Der Schaft 6 ragt bis nahe an die Reibfläche des Reibbelages 3 und ist in einen Schlitz 4 des Reibbelages 3 eingelassen, der zum benachbarten Randbereich hin offen ist.

Gemäß der Erfindung ist der Verschleißsensor 5 zumindest in seinem in den Schlitz 4 ragenden Bereich außenseitig gegenüber dem Reibbelag 3 optisch unterschiedlich und durch den Schlitz von seiner oberen Randseite her erkennbar, insbesondere wenn der Bremsbelag 1 in eine Scheibenbremse eingebaut ist.

Zur axialen Sicherung des Verschleißsensors 5 ist ein Sicherungselement in Form eines Sicherungsringes 8, beispielsweise eines Sprengringes, vorgesehen, das in eine umlaufende Nut des Schaftes 6 eingreift und gegenüber dem Schaft 6 radial vorsteht und an der dem Reibbelag 3 zugewandten Seite der Belagträgerplatte 2 anliegt.

In den Verschleißsensor 5 ist ein Kontaktleiter 9, in an sich bekannter Weise als Kabel ausgebildet, eingelassen und, bei einer Ausbildung des Stopfens als Kunststoffteil, bei dessen Herstellung mit eingegossen.

Wie erkennbar, ragt der Kontaktleiter 9 im Schaft 6 bis in einen Bereich, der durch die Verschleißgrenze für den Reibbelag 3 definiert ist.

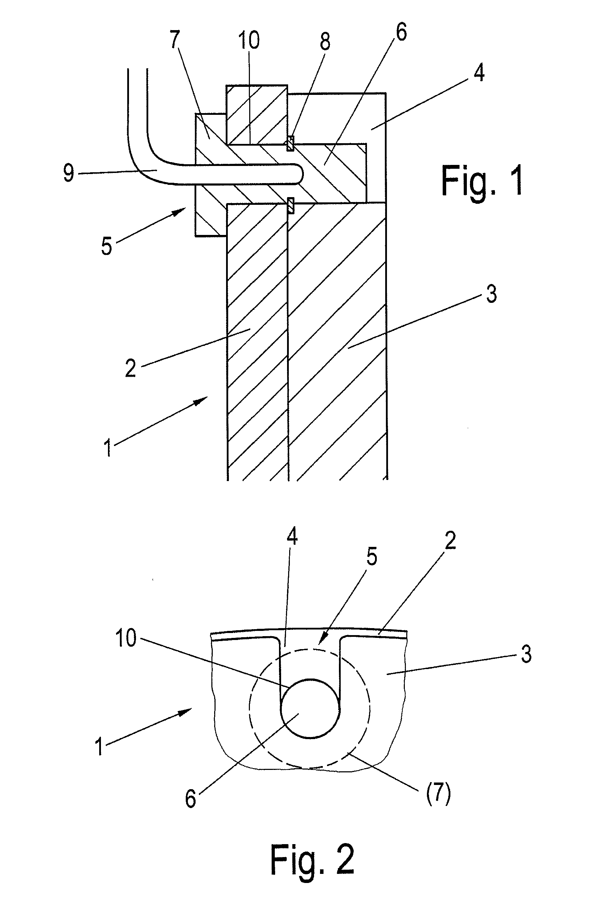

Insbesondere in der Figur 2 ist erkennbar, dass der Schaft 6 zylindrisch ausgebildet ist, wobei er in eine Bohrung 10 der Belagträgerplatte 2 eingesteckt ist.

## Patentansprüche

1. Bremsbelag einer Scheibenbremse, mit einer einen Reibbelag (3) tragenden Belagträgerplatte (2), die zur Verschleißerkennung des Reibbelages (3) mit einem in eine Bohrung (10) eingesteckten, einen Kontaktleiter (9) aufweisenden Verschleißsensor (5) versehen ist, der in einen zur benachbarten Kante hin offenen Schlitz (4) des Reibbelages (3) ragt, **dadurch gekennzeichnet, dass** zumindest die Außenfläche des Bereiches des Verschleißsensors (5), der in den Schlitz (4) ragt, gegenüber dem Reibbelag (3) optisch unterscheidbar und durch den Schlitz (4) erkennbar ist, wobei der Verschleißsensor (5) aus einem eingefärbten Kunststoff oder einem Nicht-Eisen-Metall besteht und/oder der in den Schlitz (4) ragende Bereich mit einem mantelseitigen Farbauftrag und/oder Markierungen versehen ist.

2. Bremsbelag nach Anspruch 1, **dadurch gekennzeichnet, dass** der Verschleißsensor (5) als Stopfen ausgebildet ist, mit einem Kopf (7) und einem Schaft (6).

3. Bremsbelag nach Anspruch 1 oder 2, **dadurch gekennzeichnet, dass** der Verschleißsensor (5) aus Nicht-Eisen-Metall aus Messing oder Aluminium besteht.

4. Bremsbelag nach einem der Ansprüche 2 oder 3, **dadurch gekennzeichnet, dass** der Verschleißsensor (5) mit seinem Kopf (7) an der dem Reibbelag (3) abgewandten Rückseite der Belagträgerplatte (2) anliegt.

5. Bremsbelag nach einem der vorhergehenden Ansprüche, **dadurch gekennzeichnet, dass** der Verschleißsensor (5) axial und/oder verdrehgesichert gehalten ist.

6. Bremsbelag nach einem der vorhergehenden Ansprüche, **dadurch gekennzeichnet, dass** bei Ausbildung des Verschleißsensors (5) als Spritzguss-Kunststoffteil der Kontaktleiter (9) umspritzt ist.

7. Bremsbelag nach einem der vorhergehenden Ansprüche, **dadurch gekennzeichnet, dass** der Schaft (6) in dem in den Schlitz (4) ragenden Bereich einen eckigen Querschnitt besitzt.

8. Bremsbelag nach einem der vorhergehenden Ansprüche, **dadurch gekennzeichnet, dass** der Schaft (6) bei unbenutztem Reibbelag (3) bis an die Reibfläche oder unmittelbar davor reicht.

9. Bremsbelag nach einem der Ansprüche 2 bis 8, **dadurch gekennzeichnet, dass** der Schaft (6) in dem in den Schlitz (4) ragenden Bereich einen eckigen Querschnitt besitzt.

10. Bremsbelag nach einem der Ansprüche 2 bis 9, **dadurch gekennzeichnet, dass** der Schaft (6) bei unbenutztem Reibbelag (3) bis an die Reibfläche oder unmittelbar davor reicht.

## Claims

1. Brake pad of a disc brake, comprising a pad support plate (2) supporting a friction lining (3), which is provided with a wear sensor (5) including a contact conductor (9) and inserted to a bore (10) for wear detection of the friction lining, which sensor projects into a slot (4) of said friction lining (3), which is open towards the adjacent edge, **characterised in that** at least the outside surface of the region of said wear sensor (5), which projects into said slot (4), can be optically distinguished from said friction lining (3) and can be recognised through said slot (4), with said wear sensor (5) consisting of a dyed plastic material or a non-ferrous metal and/or with said region projecting into said slot (4) being provided with an ink deposit and/or markers on the envelope side.

2. Brake pad according to Claim 1, **characterised in that** said wear sensor (5) is configured as plug including a head (7) and a shaft (6).

3. Brake pad according to Claim 1 or 2, **characterised in that** said non-ferrous metal wear sensor (5) consists of brass or aluminium.

4. Brake pad according to any of the Claims 2 or 3, **characterised in that** said wear sensor (5) bears by its head (7) against the rear side of said pad support plate (2) that is turned away from said friction lining (3).

5. Brake pad according to any of the preceding Claims, **characterised in that** said wear sensor (5) is held axially and/or in a manner preventing twisting.

6. Brake pad according to any of the preceding Claims, **characterised in that** when said wear sensor (5) is designed as injection-moulded plastic part said contact conductor (9) is encapsulated.

7. Brake pad according to any of the preceding Claims, **characterised in that** the shaft (6) of said region projecting into said slot (4) has a cornered cross-section.

8. Brake pad according to any of the preceding Claims, **characterised in that** when said friction lining (3) is not used, the shaft (6) reaches up to the friction area or to a region directly in front of it.

9. Brake pad according to any of the Claims 2 to 8, **characterised in that** the shaft (6) presents a cornered cross-section in the region projecting into said slot (4).

10. Brake pad according to any of the Claims 2 to 9, **characterised in that** when said friction lining (3) is not used, the shaft (6) reaches up to said friction area or to a region directly in front of it.

## Revendications

1. Garniture de frein d'un frein à disque, comprenant un support de garniture de friction (2) portant une garniture de friction (3), qui est muni d'un détecteur d'usure (5) renfermant un conducteur de contact (9) et inséré dans un forage (10) pour la détection d'usure à la garniture de friction, ce détecteur faisant saillie dans une fente (4) de ladite garniture de friction (3), qui est ouverte vers le bord adjacent, **caractérisée en ce qu'**au moins la surface extérieure de la zone dudit détecteur d'usure (5), qui fait saillie dans ladite fente (4), peut être distinguée optiquement de ladite garniture de friction (3) et peut être reconnu à travers ladite fente (4), audit détecteur d'usure (5) étant compose d'un matériau plastique coloré ou d'un métal non ferreux et/ou à ladite zone, qui fait saillie dans ladite fente (4), étant munie d'une couche d'encrage et/ou des marquages du côté d'enveloppe.

2. Garniture de frein selon la revendication 1, **caractérisée en ce que** ledit détecteur d'usure (5) est formé en tant qu'un bouchon contenant une tête (7) et une tige (6).

3. Garniture de frein selon la revendication 1 ou 2, **caractérisée en ce que** ledit détecteur d'usure en métal non ferreux (5) consiste en laiton ou aluminium.

4. Garniture de frein selon une quelconque des revendications 2 ou 3, **caractérisée en ce que** ledit détecteur d'usure (5) porte, par sa tête (7), contre le côté arrière dudit support de garniture de friction (2), qui est opposé à ladite garniture de friction (3).

5. Garniture de frein selon une quelconque des revendications précédentes, **caractérisée en ce que** ledit détecteur d'usure (5) est tenu en sens axial et/ou de manière à être immobilisée en rotation.

6. Garniture de frein selon une quelconque des revendications précédentes, **caractérisée en ce que** quand ledit détecteur d'usure (5) est conçu sous forme d'une pièce moulée par injection, ledit conducteur de contact (9) est encastré par injection.

7. Garniture de frein selon une quelconque des revendications précédentes, **caractérisée en ce que** ladite tige (6) de ladite zone faisant saillie dans ladite fente (4) a une coupe en travers anguleuse.

8. Garniture de frein selon une quelconque des revendications précédentes, **caractérisée en ce que** quand ladite garniture de friction (3) n'est pas utilisée, ladite tige (6) s'étend jusqu'à l'aire de frottement ou à une zone directement antérieure.

9. Garniture de frein selon une quelconque des revendications 2 à 8, **caractérisée en ce que** ladite tige (6) présente une coupe en travers anguleuse dans ladite zone faisant saillie dans ladite fente (4).

10. Garniture de frein selon une quelconque des revendications 2 à 9, **caractérisée en ce que** quand ladite garniture de friction (3) n'est pas utilisée, ladite tige (6) s'étend jusqu'à ladite aire de frottement ou à une zone directement antérieure.
